# EUROPEAN PATENT SPECIFICATION

(11) **EP 3 005 806 B1**
(45) Date of publication and mention of the grant of the patent: **18.04.2018**
(21) Application number: 13732270.7
(22) Date of filing: 05.06.2013
(51) Int. Cl.: H04W 72/04, H04W 74/08

(54) **TELECOMMUNICATIONS APPARATUS AND METHOD RELATING TO A RANDOM ACCESS PROCEDURE**
TELEKOMMUNIKATIONSVORRICHTUNG UND -VERFAHREN IM ZUSAMMENHANG MIT EINEM DIREKTZUGRIFFSVERFAHREN
APPAREIL DE TÉLÉCOMMUNICATION ET PROCÉDÉ CONCERNANT UNE PROCÉDURE D'ACCÈS ALÉATOIRE

(43) Date of publication of application: 13.04.2016
(73) Proprietor: Telefonaktiebolaget LM Ericsson (publ), 164 83 Stockholm (SE)
(72) Inventor: TIRRONEN, Tuomas, FI-00950 Helsinki (FI); LU, Qianxi, Beijing 100102 (CN); FAN, Rui, Beijing 100102 (CN); LARMO, Anna, FI-02600 Espoo (FI)
(74) Representative: Zacco Sweden AB
(86) International application number: PCT/SE2013/050647
(87) International publication number: WO 2014/196908

(56) References cited:
- KR-A- 20120 132 311
- US-A1- 2013 083 749
- US-A1- 2013 083 753
- US-A1- 2013 114 528
- INTERDIGITAL COMMUNICATIONS ET AL: "DCI formats and transmission modes supported on EPDCCH", 3GPP DRAFT; R1-124270, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. San Diego, USA; 20121008 - 20121012 29 September 2012 (2012-09-29), XP050662172, Retrieved from the Internet: URL:http://www.3gpp.org/ftp/tsg_ran/WG1_RL 1/TSGR1_70b/Docs/ [retrieved on 2012-09-29]
- INTERDIGITAL: "On scenarios and use cases for NCT Phase II", 3GPP DRAFT; R1-131339, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Chicago, USA; 20130415 - 20130419 6 April 2013 (2013-04-06), XP050697195, Retrieved from the Internet: URL:http://www.3gpp.org/ftp/tsg_ran/WG1_RL 1/TSGR1_72b/Docs/ [retrieved on 2013-04-06]

## Description

### Technical Field

The present invention relates to a telecommunications apparatus and method relating to a random access procedure, and in particular relating to the use of an enhanced physical downlink control channel during a random access procedure.

### Background

In a Long Term Evolution (LTE) network, the capacity of the physical downlink control channel, known as PDCCH, limits the admission rate from the physical random access channel, PRACH.

During a random access (RA) procedure in a LTE network, when wireless terminals such as user equipment (UE) devices or machine type communication (MTC) devices access the LTE network using the physical random access channel, PRACH, a common search space on the physical downlink control channel is used by the UE device to search for the downlink assignment for a random access response (RAR) message, which is indicated with a random access radio network temporary identifier (RA-RNTI). The common search space carries common control information and is monitored by all UEs in a cell. The common control space indicates the location which the UE needs to monitor to find system information carried by the physical downlink control channel, PDCCH, such as RA-RNTI.

A UE specific search space carries control information specific to a particular UE. As the random access procedure continues, the UE specific search space is monitored by a UE for UE specific allocations. For example, a cell radio network temporary identifier (C-RNTI) specific search space on the PDCCH is used to allocate resources for the contention resolution phase of the random access procedure.

In a recent version of the LTE standard, an enhanced PDCCH has been proposed, known as "ePDCCH". The enhanced physical downlink control channel, ePDCCH, is intended to solve some of the current limitations of the PDCCH. The ePDCCH is formally configured with the Radio Resource Control (RRC) protocol using the message "*physicalConfigDedicated*". The *physicalConfigDedicated* message is used to specify a UE specific physical channel configuration. As such, when a UE receives a *physicalConfigDedicated* message, the physical channel configuration is formally reconfigured to the ePDCCH format for that particular UE. Further details of this reconfiguration procedure, and the use of the message *physicalConfigDedicated* for configuring the ePDCCH, can be found in the 3^{rd} Generation Partnership Project technical specification 3GPP TS 36.331 (Release 11, version 11.3.0).

In the current LTE system (LTE Release-11), the ePDCCH cannot therefore be used by a particular UE until ePDCCH has been formally configured for use for that particular UE device using the RRC reconfiguration procedure described above. This limits the capacity of the random access procedure.

A 3GPP submission by InterDigital Communications, LLC ("DCI formats and transmission modes supported on EPDCCH", R1-124270) discloses the transmission modes and associated downlink control indicators supported by ePDCCH. Korean patent publication no 2012-0132311 discloses a method in which a wireless device transmits a random access preamble to a base station and receives a random access response message including a time forwarding command field from the base station.

### Summary

It is an aim of the present invention to provide a method and apparatus which obviate or reduce at least one or more of the disadvantages mentioned above.

The invention is defined in the claims appended hereto. According to a first example there is provided method in a wireless terminal of a telecommunications system. The method comprises the steps of using an enhanced physical downlink control channel to receive a downlink assignment of one or more downlink messages relating to a random access procedure, prior to an enhanced physical downlink control channel being formally configured for use with the wireless terminal.

According to another example there is provided a method in a network node of a telecommunications system. The method comprises the steps of transmitting a downlink assignment of one or more downlink messages relating to a random access procedure to a wireless terminal using an enhanced physical downlink control channel, ePDCCH, prior to the enhanced physical downlink control channel being formally configured for use with the wireless terminal.

According to another example there is provided a wireless terminal for use in a telecommunications system that comprises a physical downlink control channel, PDCCH, and an enhanced physical downlink control channel, ePDCCH, The wireless terminal comprises a receiving unit adapted to receive one or more random access downlink messages. A processing unit is adapted to use the enhanced physical downlink control channel, ePDCCH, to receive a downlink assignment of the one or more downlink messages relating to a random access procedure, prior to the enhanced physical downlink control channel being formally configured for use with the wireless terminal.

According to another example there is provided a network node for use in a telecommunications system that comprises a physical downlink control channel, PDCCH, and an enhanced physical downlink
control channel, ePDCCH. The network node comprises a transmitting unit adapted to transmit one or more downlink messages relating to a random access procedure to a wireless terminal. A processing unit is adapted to transmit a downlink assignment of the one or more downlink messages relating to a random access procedure using the enhanced physical downlink control channel, ePDCCH, prior to the enhanced physical downlink control channel being formally configured for use with the wireless terminal.

According to another example, there is provided a
method in a wireless terminal of a telecommunications system. The method comprises the steps of using an enhanced physical downlink control channel to receive a downlink assignment of one or more downlink messages relating to a random access procedure prior to the step of receiving a physicalConfigDedicated message by the wireless terminal from a network node.

### Brief description of the drawings

For a better understanding of the present invention, and to show more clearly how it may be carried into effect, reference will now be made, by way of example only, to the following drawings in which:
Figure 1a shows a method performed in a wireless terminal according to one embodiment of the present invention;
Figure 1b shows a method performed in a network node according to another embodiment of the present invention;
Figure 2 shows a contention based random access procedure, CBRA;
Figure 3 shows the steps performed by a wireless terminal according to another embodiment of the present invention;
Figure 4 shows the steps performed by a wireless terminal according to another embodiment of the present invention;
Figure 5 shows the steps performed by a network node according to another embodiment of the present invention;
Figure 6 shows the steps performed by a network node according to another embodiment of the present invention;
Figure 7 shows a contention free random access procedure, CFRA;
Figure 8 shows the steps performed by a wireless terminal according to another embodiment of the present invention;
Figure 9 shows the steps performed by a network node according to another embodiment of the present invention;
Figure 10 shows a wireless terminal according to an embodiment of the present invention; and
Figure 11 shows a network node according to an embodiment of the present invention.

### Detailed description

As will be described in greater detail below, the embodiments of the present invention enable the use of an enhanced Physical Downlink Control Channel, ePDCCH, even before a radio resource control (RRC) configuration has taken place to formally change the physical channel configuration to the ePDCCH format. This has the advantage of making it possible to use the enhanced Physical Downlink Control Channel, ePDCCH, for one or more messages in a random access (RA) procedure prior to the ePDCCH being formally configured. This in turn has the advantage of relieving a PDCCH bottleneck of the telecommunications system. By formally configured, it is meant that a wireless terminal is configured for ePDCCH use using a radio resource controller (RRC) reconfiguration procedure normally used for this purpose, according to the 3^{rd} Generation Partnership Project technical specification 3GPP TS 36.331 (Release 11, version 11.3.0), as described in the background section.

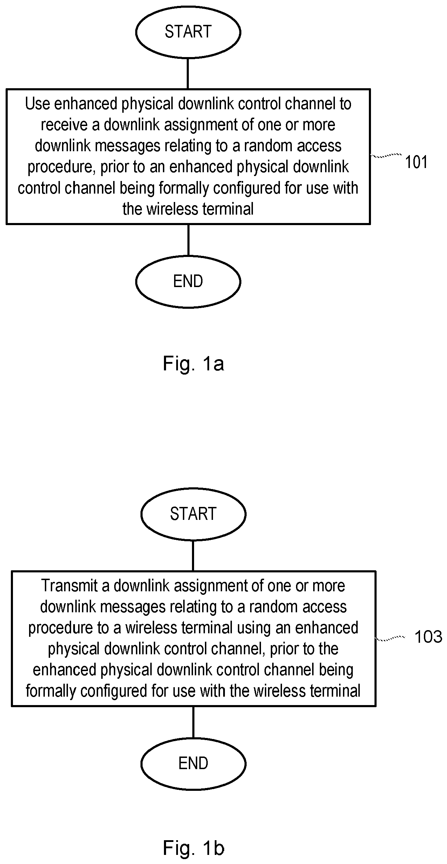

Figure 1a shows a method in a wireless terminal of a telecommunications system, according to a first aspect of the present invention. The method comprises the steps of using an enhanced physical downlink control channel to receive a downlink assignment of one or more downlink messages relating to a random access procedure, prior to an enhanced physical downlink control channel being formally configured for use with the wireless terminal, step 101.

This has the advantage of enabling an ePDCCH to be used by the wireless terminal even before it has been formally configured for use with a particular wireless terminal, thereby enabling a bottleneck on a conventional PDCCH to be avoided, for example when a large number of devices such as machine type communication (MTC) devices are trying to use the random access procedure.

The wireless terminal may comprise any form of wireless terminal, including but not limited to a user device (UE) or a machine type communication (MTC) device.

Figure 1b shows a method in a network node of a telecommunications system, according to another embodiment of the present invention. The method comprises the steps of transmitting a downlink assignment of one or more downlink messages relating to a random access procedure to a wireless terminal using an enhanced physical downlink control channel, ePDCCH, prior to the enhanced physical downlink control channel being formally configured for use with the wireless terminal, step 103.

The network node may comprise any form of network node, including but not limited to an evolved node B (eNB), or a base station, or a network node in a machine-to-machine (M2M) communication network.

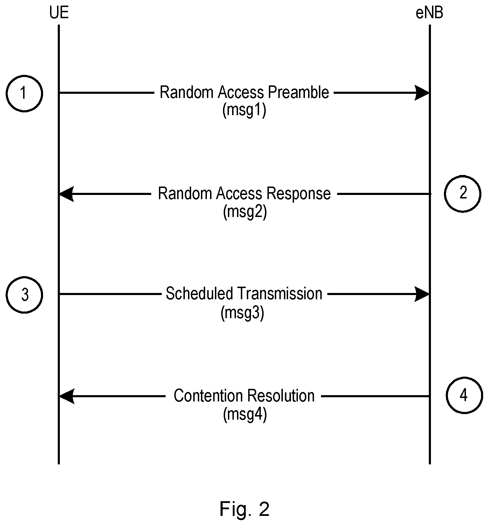

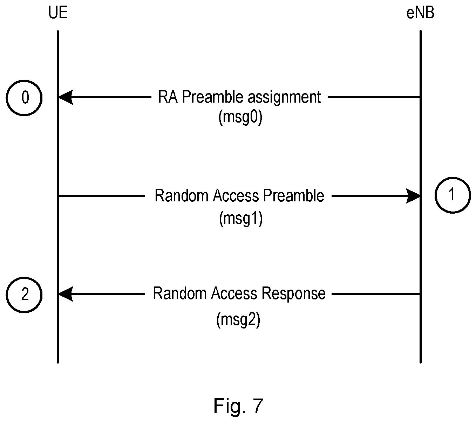

At present a random access procedure consists of either three or four steps, depending upon whether a contention based (CB) or a contention free (CF) random access procedure is being used, known as CBRA and CFRA respectively. The basic steps of each of these two forms of random access procedure are depicted in Figures 2 and 7, respectively, and explained further in the 3^{rd} Generation Partnership Project technical specification 3GPP TS 36.300 (Release 11, version 11.5.0) relating to the overall description of E-UTRAN, Stage 2, and in particular at Chapter 10.1.5.

Referring to Figure 2, the contention based random access procedure (CBRA) between a wireless terminal (such as a UE or MTC wireless device) and a network node (such as an eNB) involves two downlink transmission steps that require allocations on the Physical Downlink Control Channel, PDCCH, one being the *Random Access Response* message (msg2), and the other being the *Contention Resolution* message (msg4).

The two uplink transmission steps (depicted msg1 and msg3) do not require any Physical Downlink Control Channel, PDCCH, allocations. The first uplink message *Random Access Preamble* (msg1) is the preamble transmission on the Physical Random Access Channel, PRACH, which can be initiated by a wireless terminal without any prior allocation. The other uplink message *Scheduled Transmission* (msg3) uses an uplink grant given in the *Random Access Response* message, msg2, to transmit the message using the Physical Uplink Shared Channel (PUSCH) resources.

Further details will now be provided of the *Random Access Response* (RAR) message, msg2. During a random access procedure of the CBRA type, the first step in the procedure where the PDCCH is used is the transmission of the *Random Access Response* message, msg2, in the downlink. In a legacy system (such as LTE Rel-11), the *Random Access Response* is denoted in the traditional PDCCH common search space (CSS). As such, prior to a wireless terminal being configured to the ePDCCH format, the wireless terminal would normally search the PDCCH common search space for the downlink assignment for *Random Access Response* message, msg2.

According to one embodiment of the invention, however, the ePDCCH is used in this step, prior to ePDCCH being formally configured for the wireless terminal, as will be explained in greater detail later in the application.

Further details will now be provided of the *Contention Resolution* message, msg4, of Figure 2. As mentioned above, a second step where PDCCH is used in the random access procedure is the transmission of the *Contention Resolution* message, i.e. msg4 of Figure 2. In a scenario where a wireless terminal already has an ePDCCH configuration formally assigned, it may be used here. In the event a wireless terminal does not have a valid ePDCCH configuration, the legacy system would use either the common search space (CSS) or the normal PDCCH user specific search space (USS) for the assigned Cell Radio Network Temporary Identifier C-RNTI to search for downlink assignment for the *Contention Resolution* message, msg4.

However, according to another aspect of the invention the enhanced physical downlink control channel, ePDCCH, is used for the *Contention Resolution* message, msg4, even when the wireless terminal has not been formally configured to use the ePDCCH, for example when this is an initial access to the network or a handover from another radio access technology (RAT) or cell.

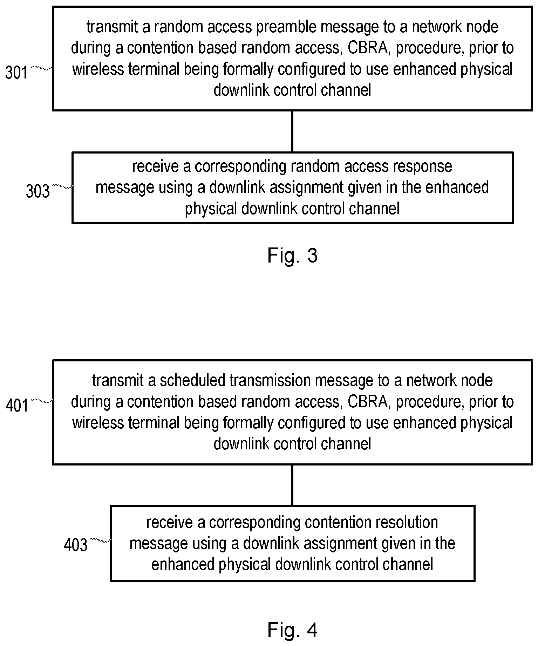

Further details of the method performed by a wireless terminal, when performing a contention based random access procedure, CBRA, according to Figure 2 will now be provided with reference to Figures 3 and 4.

Referring to Figure 3, according to one embodiment the wireless terminal performs the step of transmitting a *Random Access Preamble* message, msg1, to a network node during a contention based random access, CBRA, procedure, step 301. The *Random Access Preamble* message, msg1, is transmitted to the network node prior to the wireless terminal being formally configured to use the enhanced Physical Downlink Control Channel. The wireless terminal performs the step of receiving a corresponding *Random Access Response* message, msg2, using a downlink assignment given in the enhanced physical downlink control channel, ePDCCH, step 303.

Referring to Figure 4, according to one embodiment the wireless terminal performs the step of transmitting a *Scheduled Transmission* message to a network node during a contention based random access, CBRA, procedure, step 401. The *Scheduled Transmission* message is transmitted to the network node prior to the wireless terminal being formally configured to use the enhanced Physical Downlink Control Channel. The wireless terminal performs the step of receiving a corresponding *Contention Resolution* message (msg4) using a downlink assignment given in the enhanced physical downlink control channel, ePDCCH, in step 403.

From Figures 3 and 4 it can be appreciated that the wireless terminal is adapted to search the ePDCCH for the allocation of downlink assignments of messages, such as msg2 or msg4, even though the wireless terminal has not yet been formally configured to use the ePDCCH. This has the advantage of enabling the wireless terminal to enjoy the benefits of using ePDCCH sooner, thereby relieving bottlenecks in the conventional PDCCH. As such, the receiving step comprises the steps of searching a common ePDCCH search space or a ePDCCH user specific search space specific to the wireless terminal during the random access procedure. It is noted that one or both of msg2 and/or msg4 may be received using the downlink assignment using the ePDCCH.

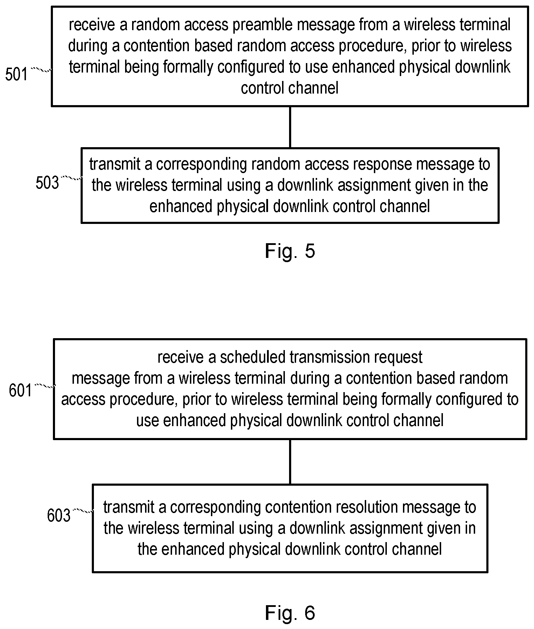

Figure 5 shows the steps performed by a network node according to another embodiment of the present invention. In step 501 the network node receives a *Random Access Preamble* message, msg1, from a wireless terminal during a contention based random access procedure. At the time the *Random Access Preamble* message is received the wireless terminal is not formally configured to use the ePDCCH. In step 503, the network node transmits a corresponding *Random Access Response* message, msg2, to the wireless terminal using a downlink assignment given in the enhanced physical downlink control channel.

Figure 6 shows the steps performed by a network node according to another embodiment of the present invention. In step 601 the network node receives a *Scheduled Transmission* request message, msg3, from a wireless terminal during a contention based random access procedure. At the time the *Scheduled Transmission* request message is received the wireless terminal is not formally configured to use the ePDCCH. In step 603 the network node transmits a corresponding *Contention Resolution* message, msg4, of a contention based random access procedure to the wireless terminal using a downlink assignment given in the enhanced physical downlink control channel.

From Figures 5 and 6 it can be appreciated that the network node is adapted to transmit one or more downlink assignments for downlink messages (such as msg2 or msg4) to a wireless terminal using the ePDCCH, even though the wireless terminal has not yet been formally configured to use the ePDCCH for such downlink assignments. This has the advantage of enabling the benefits of using the enhanced Physical Downlink Control Channel to be enjoyed sooner, thereby relieving bottlenecks in the conventional PDCCH. It is noted that one or both of msg2 and/or msg4 may be transmitted using downlink assignments given in the ePDCCH.

Referring to Figure 7, reference will now be made to how embodiments of the invention relate to the contention free random access, CFRA, procedure.

This procedure involves two downlink steps with allocations on the PDCCH, these being a *Random Access Preamble Assignment* message, msg0, and a *Random Access Response* message, msg2. The contention free random access procedure involves one uplink transmission with no PDCCH allocation required, namely the *Random Access Preamble* message, msg1.

It is noted that with regard to step 0, ePDCCH can be used if it has been already formally configured for a particular user wireless terminal. However, as this configuration step happens prior to the actual random access (RA) procedure, it is not considered in the solutions according to embodiments of the invention.

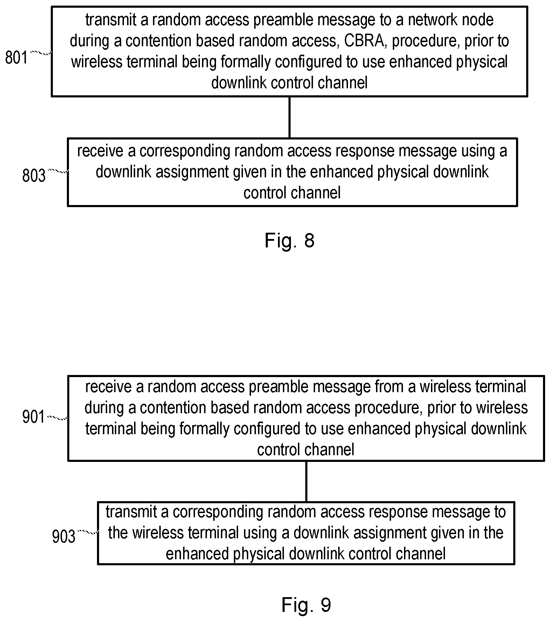

Figure 8 shows the steps performed by a wireless terminal according to another embodiment of the present invention, when performing a contention free random access procedure as shown in Figure 7. The method comprises the step of transmitting a *Random Access Preamble* message, msg1, to a network node during a contention free random access, CFRA, procedure prior to the wireless terminal being formally configured to use the ePDCCH, step 801. In step 803 the wireless terminal receives a corresponding *Random Access Response* message, msg2, using a downlink assignment given in the enhanced physical downlink control channel.

Figure 9 shows the steps performed in a network node according to another embodiment of the invention, when performing a contention free random access procedure as shown in Figure 7. The method comprises the step of receiving a *Random Access Preamble* message, msg1, from the wireless terminal during a contention free random access, CFRA, procedure prior to the wireless terminal being formally configured to use the ePDCCH, step 901. In step 903 the network node transmits a corresponding *Random Access Response* message, msg2, to the wireless terminal using a downlink assignment given in the enhanced physical downlink control channel.

From Figures 8 and 9 it can be appreciated that the wireless terminal and network node are adapted to use the ePDCCH even though the wireless terminal has not yet been formally configured to use the ePDCCH.

Further details will now be provided regarding how the wireless terminal (on the one side) and the network node (on the other side) determine how and when to use the ePDCCH even though the wireless terminal has not yet been formally configured to use the ePDCCH.

According to one embodiment a status flag is used for informing the wireless terminal and network node that the enhanced physical downlink control channel is to be used for allocation or downlink assignments for one or more particular random access messages, even before the enhanced physical downlink control channel has been formally configured for a particular wireless terminal. The status flag may be stored in a corresponding status register in a wireless terminal and/or network node.

For example, in a contention based random access procedure as shown in Figure 2, and the embodiments described in Figures 1 and 3 to 6, for example, a status flag for an ePDCCH configuration may be determined by a wireless terminal from a random access radio network temporary identifier, RA-RNTI. For example, according to one embodiment, when a wireless terminal and a network node calculates a RA-RNTI value based on the time and frequency resource the wireless terminal originally used to send a random access preamble, some specific RA-RNTI values may be used to indicate that ePDCCH is being used to provide downlink assignment of msg2, so that msg2 allocation or assignment would be searched on ePDCCH instead of PDCCH.

According to another embodiment a wireless terminal can be informed, notified or configured to search the ePDCCH for allocations based on the specification text. According to an alternative embodiment, this can be carried out by communicating the information to the relevant wireless terminals in the system information (SI). With these configuration options, the ePDCCH can be used also in the case of initial access to the network at the msg2 phase, i.e. during the *Random Access Response* phase.

This configuration option may therefore be predefined in the specification, thereby informing the network node and wireless terminal which control channel to transmit/listen to. By setting the configuration option in the specification, the network node and wireless terminal have the same view as to which control channel should be used to transmit/receive certain random access control signals.

It is noted that the use of ePDCCH for msg4 may be configured independently, for example being configured via the specification text or system information in the same manner as msg2, or configured via msg2 (for example whereby msg2 informs the wireless terminal that ePDCCH should also be used for msg4). In either scenario, the network node and wireless terminal will know which control channel should be used to transmit/receive, respectively.

It is noted that one or more wireless terminals in a telecommunications system may be configured to use the ePDCCH during random access procedures prior to it being formally configured for those one or more wireless terminals, while another group of one or more terminals may be configured to use the legacy system for random access procedures, whereby such one or more wireless terminals cannot use ePDCCH prior to it being formally configured for those one or more wireless terminals.

System information is read by a wireless terminal before the wireless terminal communicates with the network or a network node. A wireless terminal has the correct system information at all times, as described in 3GPP technical specification TS 36.331 (Release 11, version 11.3.0). Such system information can therefore be modified according to embodiments of the invention, such that it includes a status flag or some other form of information element to specify if ePDCCH is to be used in the random access procedures. Wireless terminals configured to use the invention may use one group of preamble messages, while wireless terminals not being configured to use the invention may use a different group of preamble messages, such that a network node can determine which control channel to then use. In this way a network node can know the capability of the wireless terminal that it is communicating with, and send the appropriate PDCCH or ePDCCH control signal. As a further alternative, the network node may be adapted to store information regarding whether or not a particular wireless terminal is adapted to use ePDCCH before it has been formally configured.

According to one embodiment of the invention, the status flag that is used to indicate that ePDCCH should be used during the msg2 phase (for example using the ePDCCH allocation that was used for RA-RNTI in the msg2 phase), as described above, is used also as a status flag for indicating that ePDCCH is to be used for the msg4 phase, i.e. during the *Contention Resolution* phase. In such an embodiment, the use of ePDCCH is tied to some RA-RNTIs, that is, to cases where random access preamble is sent on some specific time-frequency resources of PRACH.

The status flag provides an indication to the wireless terminal whether or not to look for the msg2 allocation, and/or the msg4 allocation, on the ePDCCH (or only in the conventional PDCCH, user specific search space, USS, or common search space, CSS).

According to one embodiment the status flag can be set via predefining or pre-configuring the ePDCCH allocation for one or more specific random access messages in the overall specification. In other words, one or more wireless terminals and network nodes may be preconfigured to use the ePDCCH even during circumstances when a particular wireless terminal has not been formally configured to use the ePDCCH.

According to another embodiment the status flag can be set using system information (SI).

According to another embodiment the status flag for a *Contention Resolution* message, msg4, can be set through a preceding *Random Access Response* message, msg2. In this respect, a form of relationship is made between the *Random Access Response* message msg2 and a subsequent *Contention Resolution* message msg4, where a *Random Access Response* message msg2 that is read from the ePDCCH indicated transmission are followed up with an ePDCCH indicated *Contention Resolution* message, msg4.

When using the *Random Access Response* message msg2 to convey a status flag informing that ePDCCH should also be used for the *Contention Resolution* message, msg4, this can be conveyed in a number of different ways within the *Random Access Response* message msg2.

For example, according to one embodiment any free bit or bits from the *Random Access Response* message msg2 are used to indicate that the ePDCCH should be used for the *Contention Resolution* message msg4. Alternatively, one or more bits from the *Random Access Response* message msg2 are stolen or modified from a *Random Access Response* message msg2 (for example, one or more bits which are not being used for a particular reason). According to an alternative embodiment the *Random Access Response* message msg2 is extended or enhanced to include the status flag information.

It is noted that other mechanisms can be used to convey the status flag information or similar information element, for indicating that ePDCCH is to be used for one or more random access messages prior to a wireless terminal being formally configured to use ePDCCH, without departing from the scope of the invention as defined in the appended claims.

For a contention free random access procedure as shown in Figure 7, and the embodiments described in Figures 1, 8 and 9, for example, a status flag for an ePDCCH configuration can be conveyed as follows.

According to one embodiment, ePDCCH is configured for the *Random Access Response* message msg2 for the CFRA procedure by setting a status flag to indicate the ePDCCH configuration for the chosen preamble at step 0 of Figure 7, i.e. in the *Random Access Preamble Assignment* message, msg0.

In this way, a wireless terminal knows to look for the RA-RNTI in the ePDCCH instead of the CSS on the normal PDCCH.

Alternatively, the C-RNTI specific ePDCCH allocation may be used in some situations, such as handovers. In the case of a handover, a target network node (such as an eNB) informs the wireless terminal whether ePDCCH is to be used for the *Random Access Response* message msg2 and the related ePDCCH allocation for the wireless terminal's C-RNTI through the handover command. This allows the network to transmit two or more separate RAR messages in the same subframe.

There are benefits from using this approach. One benefit is that the size of the *Random Access Response* payload may be decreased by splitting the *Random access Response* into separate transmissions. For example, msg2 may be transmitted in both PDCCH and ePDCCH, such that msg2 for legacy wireless terminals can be in one protocol data unit (PDU), and such that the msg2 for advanced wireless terminals can be in another PDU, with the original msg2 being split and then its size reduced. A second benefit is that the latency of the *Random Access Response* message may be decreased as more *Random Access Response* messages can be transmitted at the same time without causing allocations that are too large on the Physical Downlink Shared Channel (PDSCH).

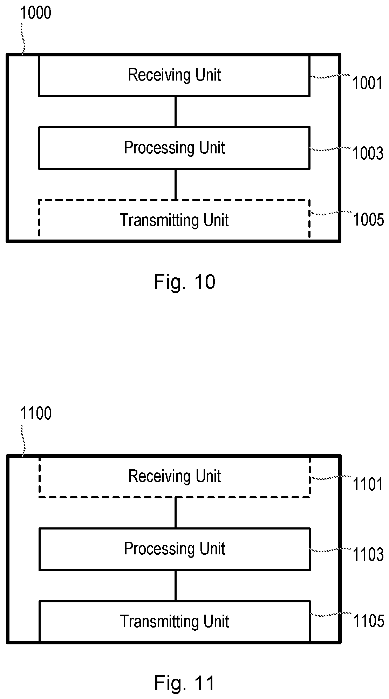

Figure 10 shows a wireless terminal 1000 according to an embodiment of the invention, for use in a telecommunications system that comprises a physical downlink control channel, PDCCH, and an enhanced physical downlink control channel, ePDCCH. The wireless terminal 1000 comprises a receiving unit 1001 adapted to receive one or more random access downlink messages. A processing unit 1003 is adapted to use the enhanced physical downlink control channel, ePDCCH, to receive a downlink assignment of the one or more downlink messages relating to a random access procedure, prior to the enhanced physical downlink control channel being formally configured for use with the wireless terminal 1000. The wireless terminal 1000 can be further adapted to perform any one of the methods described above with reference to Figures 1a, 3, 4 and 8. The wireless terminal 1000 may comprise a transmitting unit 1005 for transmitting messages to a network node, when performing certain steps described in the methods above.

Figure 11 shows a network node 1100 according to an embodiment of the invention, for use in a telecommunications system that comprises a physical downlink control channel, PDCCH, and an enhanced physical downlink control channel, ePDCCH. The network node 1100 comprises a transmitting unit 1105 adapted to transmit one or more downlink messages relating to a random access procedure to a wireless terminal. A processing unit 1103 is adapted to transmit a downlink assignment of the one or more downlink messages relating to a random access procedure using the enhanced physical downlink control channel, ePDCCH, prior to the enhanced physical downlink control channel being formally configured for use with the wireless terminal. The processing unit 1103 may be further adapted to perform the method as defined in any one of the methods described above with reference to Figures 1b, 5, 6 and 9. The network node 1100 may comprise a receiving unit 1101 for receiving messages from a wireless terminal, when performing certain steps described in the methods above.

The embodiments of the invention described above have the advantage that the enhanced physical downlink control channel, ePDCCH, may be used instead of the normal physical downlink control channel, PDCCH, for certain steps of a random access procedure. This in turn has the advantage of providing improved capacity for those particular steps in the random access procedure, due to the enhanced capacity offered by ePDCCH. This is particularly advantageous in applications such as Machine-to-Machine Communication (MTC) scenarios in which a large number of devices access the network.

Although the embodiments of the invention have been described in the context of LTE, it is noted that the invention is also applicable to other telecommunication protocols. In addition, although the embodiments of the invention have been described with reference to specific random access messages, and to specific CBRA and CFRA procedures, it is noted that the ePDCCH can be used for allocation or assignment of other messages in the random access procedure.

It should be noted that the above-mentioned embodiments illustrate rather than limit the invention, and that those skilled in the art will be able to design many alternative embodiments without departing from the scope of the appended claims. The word "comprising" does not exclude the presence of elements or steps other than those listed in a claim, "a" or "an" does not exclude a plurality, and a single processor or other unit may fulfil the functions of several units recited in the claims. Any reference signs in the claims shall not be construed so as to limit their scope.

## Claims

1. A method in a wireless terminal of an LTE telecommunications system, the method comprising the steps of using an enhanced physical downlink control channel, ePDCCH, to receive a downlink assignment of radio resources for one or more downlink messages relating to a random access procedure, prior to an ePDCCH being formally configured for use with the wireless terminal by a radio resource controller, RRC, reconfiguration procedure (step 101).

2. A method as claimed in claim 1, further comprising the steps of:
transmitting a random access preamble message (msg1) to a network node during a contention based random access, CBRA, procedure, prior to the wireless terminal being formally configured to use the ePDCCH by the RRC reconfiguration procedure (step 301); and
receiving a corresponding random access response message (msg2) using a downlink assignment given in the ePDCCH (step 303).

3. A method as claimed in claim 1 or 2, further comprising the steps of:
transmitting a scheduled transmission message (msg3) to a network node during a contention based random access, CBRA, procedure prior to the wireless terminal being formally configured to use the ePDCCH by the RRC reconfiguration procedure (step 401); and
receiving a corresponding contention resolution message (msg4) using a downlink assignment given in the ePDCCH (step 403).

4. A method as claimed in any one of claims 1 to 3, wherein the receiving step comprises the steps of searching a common ePDCCH search space or a ePDCCH search space specific to the wireless terminal during the random access procedure.

5. A method as claimed in claim 1, further comprising the steps of:
transmitting a random access preamble message (msg1) to a network node during a contention free random access, CFRA, procedure prior to the wireless terminal being formally configured to use the ePDCCH by the RRC reconfiguration procedure (step 801); and
receiving a corresponding random access response message (msg2) using a downlink assignment given in the ePDCCH (step 803).

6. A method in a network node of an LTE telecommunications system, the method comprising the steps of transmitting a downlink assignment of radio resources for one or more downlink messages relating to a random access procedure to a wireless terminal using an enhanced physical downlink control channel, ePDCCH, prior to the enhanced physical downlink control channel being formally configured for use with the wireless terminal by a radio resource controller, RRC, reconfiguration procedure (step 103).

7. A method as claimed in claim 6, further comprising the steps of:
receiving a random access preamble message (msg1) from the wireless terminal during a contention based random access, CBRA, procedure, prior to the wireless terminal being formally configured to use the ePDCCH by the RRC reconfiguration procedure (step 501); and
transmitting a corresponding random access response message (msg2) to the wireless terminal using a downlink assignment given in the ePDCCH (step 503).

8. A method as claimed in claim 6 or 7, further comprising the step of:
receiving a scheduled transmission request message (msg3) from the wireless terminal during a contention based random access, CBRA, procedure, prior to the wireless terminal being formally configured to use the ePDCCH by the RRC reconfiguration procedure (step 601); and
transmitting a corresponding contention resolution message (msg4) to the wireless terminal using a downlink assignment given in the ePDCCH (step 603).

9. A method as claimed in claim 8, when dependent on claim 6, wherein the step of transmitting the contention resolution message using the ePDCCH is linked to the step of transmitting the random access response message using ePDCCH.

10. A method as claimed in claim 6, further comprising the steps of:
receiving a random access preamble message (msg1) from the wireless terminal during a contention free random access, CFRA, procedure, prior to the wireless terminal being formally configured to use the ePDCCH by the RRC reconfiguration procedure (step 901); and
transmitting a corresponding random access response message (msg2) to the wireless terminal using a downlink assignment given in the ePDCCH (step 903).

11. A method as claimed in any one of claims 1 to 10, further comprising the step of providing a status flag for informing a wireless terminal or network node to use the ePDCCH prior to the ePDCCH being configured for a particular wireless terminal by the RRC reconfiguration procedure.

12. A method as claimed in claim 11, wherein the status flag is conveyed via:
a random access radio network temporary identifier, RA-RNTI; or
specification text; or
a system pre-configuration procedure; or
system information; or
a random access response message (msg2); or
a random access preamble assignment message (msg0).

13. A wireless terminal (1000) for use in an LTE telecommunications system that comprises a physical downlink control channel, PDCCH, and an enhanced physical downlink control channel, ePDCCH, the wireless terminal (1000) being configured to perform the method according to any one of claims 1 to 5, or any one of claims 11 and 12 when dependent on any one of claims 1 to 5.

14. A wireless terminal (1000) as claimed in claim 13, wherein the processing unit is adapted to use the enhanced physical downlink control channel, ePDCCH, to receive a downlink assignment of the one or more downlink messages relating to a random access procedure, prior to the wireless terminal (1000) receiving a physicalConfigDedicated message.

15. A network node (1100) for use in an LTE telecommunications system that comprises a physical downlink control channel, PDCCH, and an enhanced physical downlink control channel, ePDCCH, the network node (1100) being configured to perform the method according to any one of claims 6 to 10, or any one of claims 11 and 12 when dependent on any one of claims 6 to 10.

## Patentansprüche

1. Verfahren in einem drahtlosen Endgerät eines LTE-Telekommunikationssystems, wobei das Verfahren die Schritte des Verwendens eines erweiterten physischen Downlink-Steuerkanals (ePDCCH) umfasst, um eine Downlink-Zuweisung von Funkressourcen für eine oder mehrere Downlink-Nachrichten bezüglich einer Random Access-Prozedur zu empfangen, bevor ein ePDCCH formal zur Verwendung mit dem drahtlosen Endgerät durch eine Neukonfigurationsprozedur einer Funkressourcensteuerung (RRC) konfiguriert wird (Schritt 101).

2. Verfahren nach Anspruch 1, ferner umfassend die folgenden Schritte:
Übertragen einer Random Access-Präambelnachricht (msg1) an einen Netzknoten während einer konfliktbasierten Random Access (CBRA)-Prozedur, bevor das drahtlose Endgerät formal zur Verwendung des ePDCCH durch die RRC-Neukonfigurationsprozedur konfiguriert wird (Schritt 301); und
Empfangen einer entsprechenden Random Access-Antwortnachricht (msg2) unter Verwendung einer in dem ePDCCH angegebenen Downlink-Zuweisung (Schritt 303).

3. Verfahren nach Anspruch 1 oder 2, ferner umfassend die folgenden Schritte:
Übertragen einer geplanten Übertragungsnachricht (msg3) an einen Netzknoten während einer konfliktbasierten Random Access (CBRA)-Prozedur, bevor das drahtlose Endgerät formal zur Verwendung des ePDCCH durch die RRC-Neukonfigurationsprozedur konfiguriert wird (Schritt 401); und
Empfangen einer entsprechenden Konfliktauflösungsnachricht (msg4) unter Verwendung einer in dem ePDCCH angegebenen Downlink-Zuweisung (Schritt 403) .

4. Verfahren nach einem der Ansprüche 1 bis 3, wobei der Empfangsschritt die Schritte des Suchens eines gemeinsamen ePDCCH-Suchraums oder eines für das drahtlose Endgerät spezifischen ePDCCH-Suchraums während der Random Access-Prozedur umfasst.

5. Verfahren nach Anspruch 1, ferner umfassend die folgenden Schritte:
Übertragen einer Random Access-Präambelnachricht (msg1) an einen Netzknoten während einer konfliktfreien Random Access (CFRA)-Prozedur, bevor das drahtlose Endgerät formal zur Verwendung des ePDCCH durch die RRC-Neukonfigurationsprozedur konfiguriert wird (Schritt 801); und
Empfangen einer entsprechenden Random Access-Antwortnachricht (msg2) unter Verwendung einer in dem ePDCCH angegebenen Downlink-Zuweisung (Schritt 803).

6. Verfahren in einem Netzknoten eines LTE-Telekommunikationssystems, wobei das Verfahren die Schritte des Übertragens einer Downlink-Zuweisung von Funkressourcen für eine oder mehrere Downlink-Nachrichten bezüglich einer Random Access-Prozedur an ein drahtloses Endgerät unter Verwendung eines erweiterten physischen Downlink-Steuerkanals (ePDCCH) umfasst, bevor der erweiterte physische Downlink-Steuerkanal formal zur Verwendung mit dem drahtlosen Endgerät durch eine Neukonfigurationsprozedur einer Funkressourcensteuerung (RRC) konfiguriert wird (Schritt 103).

7. Verfahren nach Anspruch 6, ferner umfassend die folgenden Schritte:
Empfangen einer Random Access-Präambelnachricht (msg1) von dem drahtlosen Endgerät während einer konfliktbasierten Random Access (CBRA)-Prozedur, bevor das drahtlose Endgerät formal zur Verwendung des ePDCCH durch die RRC-Neukonfigurationsprozedur konfiguriert wird (Schritt 501); und
Übertragen einer entsprechenden Random Access-Antwortnachricht (msg2) an das drahtlose Endgerät unter Verwendung einer in dem ePDCCH angegebenen Downlink-Zuweisung (Schritt 503).

8. Verfahren nach Anspruch 6 oder 7, ferner umfassend die folgenden Schritte:
Empfangen einer geplanten Übertragungsaufforderungsnachricht (msg3) von dem drahtlosen Endgerät während einer konfliktbasierten Random Access (CBRA)-Prozedur, bevor das drahtlose Endgerät formal zur Verwendung des ePDCCH durch die RRC-Neukonfigurationsprozedur konfiguriert wird (Schritt 601); und
Übertragen einer entsprechenden Konfliktauflösungsnachricht (msg4) an das drahtlose Endgerät unter Verwendung einer in dem ePDCCH angegebenen Downlink-Zuweisung (Schritt 603).

9. Verfahren nach Anspruch 8, wenn dieser von Anspruch 6 abhängig ist, wobei der Schritt des Übertragens der Konfliktauflösungsnachricht unter Verwendung des ePDCCH mit dem Schritt des Übertragens der Random Access-Antwortnachricht unter Verwendung des ePDCCH verbunden ist.

10. Verfahren nach Anspruch 6, ferner umfassend die folgenden Schritte:
Empfangen einer Random Access-Präambelnachricht (msg1) von dem drahtlosen Endgerät während einer konfliktfreien Random Access (CFRA)-Prozedur, bevor das drahtlose Endgerät formal zur Verwendung des ePDCCH durch die RRC-Neukonfigurationsprozedur konfiguriert wird (Schritt 901); und
Übertragen einer entsprechenden Random Access-Antwortnachricht (msg2) an das drahtlose Endgerät unter Verwendung einer in dem ePDCCH angegebenen Downlink-Zuweisung (Schritt 903).

11. Verfahren nach einem der Ansprüche 1 bis 10, ferner umfassend den Schritt des Bereitstellens eines Statusflags zum Informieren eines drahtlosen Endgeräts oder Netzknotens, den ePDCCH zu verwenden, bevor der ePDCCH für ein bestimmtes drahtloses Endgerät durch die RRC-Neukonfigurationsprozedur konfiguriert wird.

12. Verfahren nach Anspruch 11, wobei das Statusflag übermittelt wird über:
eine temporäre Kennung des Random Access-Funknetzes (RA-RNTI); oder
Beschreibungstext; oder
eine Systemvorkonfigurationsprozedur; oder
Systeminformationen; oder
eine Random Access-Antwortnachricht (msg2); oder
eine Random Access-Präambelzuweisungsnachricht (msg0).

13. Drahtloses Endgerät (1000) zur Verwendung in einem LTE-Telekommunikationssystem, das einen physischen Downlink-Steuerkanal (PDCCH) und einen erweiterten physischen Downlink-Steuerkanal (ePDCCH) umfasst, wobei das drahtlose Endgerät (1000) dazu konfiguriert ist, das Verfahren nach einem der Ansprüche 1 bis 5 oder einem der Ansprüche 11 und 12, wenn diese von einem der Ansprüche 1 bis 5 abhängig sind, durchzuführen.

14. Drahtloses Endgerät (1000) nach Anspruch 13, wobei die Verarbeitungseinheit ausgelegt ist, den erweiterten physischen Downlink-Steuerkanal (ePDCCH) zu verwenden, um eine Downlink-Zuweisung der einen oder mehreren Downlink-Nachrichten bezüglich einer Random Access-Prozedur zu empfangen, bevor das drahtlose Endgerät (1000) eine physicalConfigDedicated-Nachricht empfängt.

15. Netzknoten (1100) zur Verwendung in einem LTE-Telekommunikationssystem, das einen physischen Downlink-Steuerkanal (PDCCH) und einen erweiterten physischen Downlink-Steuerkanal (ePDCCH) umfasst, wobei der Netzknoten (1100) dazu konfiguriert ist, das Verfahren nach einem der Ansprüche 6 bis 10 oder einem der Ansprüche 11 und 12, wenn diese von einem der Ansprüche 6 bis 10 abhängig sind, durchzuführen.

## Revendications

1. Procédé dans un terminal sans fil d'un système de communication LTE, le procédé comprenant les étapes d'utilisation d'un canal physique de commande de liaison descendante amélioré, ePDCCH, pour recevoir une attribution de ressources radio de liaison descendante pour un ou plusieurs messages de liaison descendante relatifs à une procédure d'accès aléatoire, avant qu'un ePDCCH soit formellement configuré pour l'utilisation avec le terminal sans fil par une procédure de reconfiguration de contrôleur de ressources radio, RRC, (étape 101).

2. Procédé selon la revendication 1, comprenant en outre les étapes suivantes :
la transmission d'un message de préambule d'accès aléatoire (msg1) à un noeud de réseau durant une procédure d'accès aléatoire basée sur la contention, CBRA, avant que le terminal sans fil soit formellement configuré pour utiliser l'ePDCCH par la procédure de reconfiguration RRC (étape 301) ; et
la réception d'un message de réponse d'accès aléatoire correspondant (msg2) en utilisant une attribution de liaison descendante donnée dans l'ePDCCH (étape 303).

3. Procédé selon la revendication 1 ou 2, comprenant en outre les étapes suivantes :
la transmission d'un message de transmission planifiée (msg3) à un noeud de réseau duant une procédure d'accès aléatoire basée sur la contention, CBRA, avant que le terminal sans fil soit formellement configuré pour utiliser l'ePDCCH par la procédure de reconfiguration RRC (étape 401) ; et
la réception d'un message de résolution de contention correspondant (msg4) en utilisant une attribution de liaison descendante donnée dans l'ePDCCH (étape 403).

4. Procédé selon l'une quelconque des revendications 1 à 3, dans lequel l'étape de réception comprend les étapes de recherche d'un espace de recherche d'ePDCCH commun ou d'un espace de recherche d'ePDCCH spécifique au terminal sans fil durant la procédure d'accès aléatoire.

5. Procédé selon la revendication 1, comprenant en outre les étapes suivantes :
la transmission d'un message de préambule d'accès aléatoire (msg1) à un noeud de réseau durant une procédure d'accès aléatoire sans contention, CFRA, avant que le terminal sans fil soit formellement configuré pour utiliser l'ePDCCH par la procédure de reconfiguration RRC (étape 801) ; et
la réception d'un message de réponse d'accès aléatoire correspondant (msg2) en utilisant une attribution de liaison descendante donnée dans l'ePDCCH (étape 803).

6. Procédé dans un noeud de réseau d'un système de communication LTE, le procédé comprenant les étapes de transmission d'une attribution de liaison descendante de ressources radio pour un ou plusieurs messages de liaison descendante relatifs à une procédure d'accès aléatoire à un terminal sans fil en utilisant un canal physique de commande de liaison descendante amélioré, ePDCCH, avant que le canal physique de commande de liaison descendante amélioré soit formellement configuré pour l'utilisation avec le terminal sans fil par une procédure de reconfiguration de contrôleur de ressources radio, RRC, (étape 103).

7. Procédé selon la revendication 6, comprenant en outre les étapes suivantes :
la réception d'un message de préambule d'accès aléatoire (msg1) à partir du terminal sans fil durant une procédure d'accès aléatoire basée sur la contention, CBRA, avant que le terminal sans fil soit formellement configuré pour utiliser l'ePDCCH par la procédure de reconfiguration RRC (étape 501) ; et
la transmission d'un message de réponse d'accès aléatoire correspondant (msg2) au terminal sans fil en utilisant une attribution de liaison descendante donnée dans l'ePDCCH (étape 503) .

8. Procédé selon la revendication 6 ou 7, comprenant en outre l'étape suivante :
la réception d'un message de demande de transmission planifiée (msg3) à partir du terminal sans fil en utilisant une procédure d'accès aléatoire basée sur la contention, CBRA, avant que le terminal sans fil soit formellement configuré pour utiliser l'ePDCCH par la procédure de reconfiguration RRC (étape 601) ; et
la transmission d'un message de résolution de contention correspondant (msg4) au terminal sans fil en utilisant une attribution de liaison descendante donnée dans l'ePDCCH (étape 603) .

9. Procédé selon la revendication 8, quand elle dépend de la revendication 6, dans lequel l'étape de transmission du message de résolution de contention en utilisant l'ePDCCH est liée à l'étape de transmission du message de réponse d'accès aléatoire en utilisant l'ePDCCH.

10. Procédé selon la revendication 6, comprenant en outre les étapes suivantes :
la réception d'un message de préambule d'accès aléatoire (msg1) à partir du terminal sans fil durant une procédure d'accès aléatoire sans contention, CFRA, avant que le terminal sans fil soit formellement configuré pour utiliser l'ePDCCH par la procédure de reconfiguration RRC (étape 901) ; et
la transmission d'un message de réponse d'accès aléatoire correspondant (msg2) au terminal sans fil en utilisant une attribution de liaison descendante donnée dans l'ePDCCH (étape 903) .

11. Procédé selon l'une quelconque des revendications 1 à 10, comprenant en outre l'étape de fourniture d'un indicateur d'état pour informer un terminal sans fil ou un noeud de réseau d'utiliser l'ePDCCH avant que l'ePDCCH soit configuré pour un terminal sans fil particulier par la procédure de reconfiguration RRC.

12. Procédé selon la revendication 11, dans lequel l'indicateur d'état est transporté par :
un identificateur temporaire de réseau radio d'accès aléatoire, RA-RNTI ; ou
un texte de spécification ; ou
une procédure de pré-configuration de système ; ou
des informations de système ; ou
un message de réponse d'accès aléatoire (msg2) ; ou
un message d'attribution de préambule d'accès aléatoire (msg0).

13. Terminal sans fil (1000) pour l'utilisation dans un système de communication LTE qui comprend un canal physique de commande de liaison descendante, PDCCH, et un canal physique de commande de liaison descendante amélioré, ePDCCH, le terminal sans fil (1000) étant configuré pour effectuer le procédé selon l'une quelconque des revendications 1 à 5, ou l'une quelconque des revendications 11 et 12 quand elles dépendent de l'une quelconque des revendications 1 à 5.

14. Terminal sans fil (1000) selon la revendication 13, dans lequel l'unité de traitement est adaptée pour utiliser le canal physique de commande de liaison descendante amélioré, ePDCCH, pour recevoir une attribution de liaison descendante de l'un ou plusieurs messages de liaison descendante relatifs à une procédure d'accès aléatoire, avant que le terminal sans fil (1000) ne reçoive un message physicalConfigDedicated.

15. Noeud de réseau (1100) pour l'utilisation dans un système de communication LTE qui comprend un canal physique de commande de liaison descendante, PDCCH, et un canal physique de commande de liaison descendante amélioré, ePDCCH, le noeud de réseau (1100) étant configuré pour effectuer le procédé selon l'une quelconque des revendications 6 à 10, ou l'une quelconque des revendications 11 et 12 quand elles dépendent de l'une quelconque des revendications 6 à 10.
